Europäisches Patentamt

European Patent Office

Office européen des brevets

(19)

(11) Veröffentlichungsnummer: **0 200 676**
**B1**

(12) **EUROPÄISCHE PATENTSCHRIFT**

(45) Veröffentlichungstag der Patentschrift:
**26.10.88**

(21) Anmeldenummer: **86810133.8**

(22) Anmeldetag: **21.03.86**

(51) Int. Cl.⁴: **F 16 B  13/10**

(54) **Dübel.**

(30) Priorität: **25.04.85  DE 3514955**

(43) Veröffentlichungstag der Anmeldung:
**10.12.86 Patentblatt 86/45**

(45) Bekanntmachung des Hinweises auf die Patenterteilung:
**26.10.88 Patentblatt 88/43**

(84) Benannte Vertragsstaaten:
**CH DE FR GB LI SE**

(56) Entgegenhaltungen:
**DE - A - 2 535 066**
**US - A - 4 014 243**

(73) Patentinhaber: **HILTI Aktiengesellschaft,**
**FL-9494 Schaan (LI)**

(72) Erfinder: **Froehlich, Peter, Lerchenweg 7,**
**D-8027 Neuried (DE)**

(74) Vertreter: **Wildi, Roland, Hilti Aktiengesellschaft**
**Patentabteilung, FL-9494 Schaan (LI)**

ACTORUM AG

## Beschreibung

Die Erfindung betrifft einen Dübel mit einer Hülse, die fensterartige Durchbrüche aufweist, in welchen im wesentlichen radial verschiebbare, in Ausgangsstellung in die lichte Weite der Hülse ragende Verriegelungskörper gelagert sind, die eine die Hülsenwandstärke überragende Radialerstreckung aufweisen, und die in die lichte Weite der Hülse ragende freie Stirnseite der Verriegelungskörper mit einem die Verriegelungskörper in eine die Aussenkontur der Hülse überragende Stellung verschiebbaren Spreizdorn zusammenwirkt, auf den eine von einem Werkzeug wenigstens in Setzrichtung aufgebrachte Kraft einwirkt, wobei der Spreizdorn eine sich in Setzrichtung kegelig verjüngende, mit den Verriegelungskörpern zusammenwirkende Mantelkontur aufweist.

Aus der DE-A-25 35 066 ist ein derartiger, ausschliesslich zum Setzen in Aufnahmebohrungen mit Hinterschneidung geeigneter Dübel bekannt, der mittels eines Spreizgliedes radial in die Hinterschneidung auslenkbare, in fensterartigen Durchbrüchen gelagerte Verriegelungskörper aufweist. Hierzu wird das Spreizglied gedreht und läuft zufolge einer Schraubverbindung in Setzrichtung zwischen die Verriegelungskörper ein. Erfahrungsgemäss ist der Dübel nach dem Einbringen in eine Aufnahmebohrung in dieser frei drehbar. Demzufolge ist es nicht möglich, lediglich durch Drehen des Spreizgliedes das zur Erzielung einer Verankerung erforderliche, radiale Verschieben der Verriegelungskörper zu bewirken, da vom Spreizglied über die Schraubverbindung die Verriegelungskörper und mit diesen die Hülse wirkungslos mitgedreht würden. Um ein Verschieben der Verriegelungskörper zu erreichen, muss deshalb die Hülse während des Drehens des Spreizgliedes gegen Mitdrehen gesichert werden, was entsprechender an der Hülse angreifender Hilfsmittel und umständlicher Manipulation bedarf.

Der Erfindung liegt die Aufgabe zugrunde, einen Dübel mit radial auslenkbaren Verriegelungskörpern zu schaffen, der ohne separate Hilfsmittel einfach setzbar ist.

Erfindungsgemäss wird die Aufgabe durch die kennzeichnenden Merkmale des Anspruches 1 gelöst.

Durch die von aussen auf den Spreizdorn axial einwirkende Kraft läuft dieser zwischen die Verriegelungskörper ein, ohne dass gesonderte Hilfsmittel oder Manipulationen mit der Hülse erforderlich sind. Auf diese Weise ist also ein zuverlässiges Ausrücken der Verriegelungskörper in Verbindung mit einem einfachen Setzvorgang gewährleistet. Die Verriegelungskörper können so in eine beispielsweise vorgefertigte Hinterschneidung in der Aufnahmebohrung eintreten.

Die axial gerichtete Kraft kann als kontinuierlich aufgebrachter Druck auf den Spreizdorn einwirken. Zweckmässig ist es, mittels an sich bekannter Werkzeuge, wie beispielsweise Schlagbohrmaschinen, diese Kraft in Form von Schlägen einzuleiten.

Zur Einfachheit des Dübels trägt bei, dass die Verriegelungskörper über beim Setzvorgang berstende Stege miteinander verbunden sind. Dieserart wird auch eine Transportsicherung der Verriegelungskörper in der Hülse erreicht. Ferner verhindern die Stege in der Anfangsphase des Setzvorganges ein vorzeitiges Ausrücken der Verriegelungskörper.

Zweckmässig steht der Spreizdorn über Führungsmittel in drehschlüssiger Verbindung mit der Hülse. Diese Ausbildung ist insbesondere von Vorteil, wenn der Spreizdorn anstelle einer kegeligen Mantelkontur eine keilförmige Spreizzone aufweist. Die keilförmige Spreizzone bedarf einer definierten Drehstellung zu den Verriegelungskörpern und damit auch zur Hülse, was durch die vorschlagsgemässe drehschlüssige Verbindung gewährleistet wird. Im Bedarfsfalle ist es dank der drehschlüssigen Verbindung aber auch möglich, über die Führungsmittel vom Werkzeug her Drehung auf die Spreizkörper und auf die Hülse zu übertragen.

Nach einem weiteren Vorschlag der Erfindung besteht der Spreizdorn aus einem die kegelige Mantelkontur aufweisenden ersten Abschnitt und aus einem die Führungsmittel tragenden zweiten Abschnitt. Der Spreizdorn mit den Führungsmitteln kann einteilig oder getrennt ausgebildet sein.

Bei getrennter Ausbildung ist der Spreizdorn zweckmässig Teil des Dübels. Die Führungsmittel sind mit Vorteil als in den zweiten Abschnitt und in Schlitze an der Hülse eingreifende Platte ausgebildet. Das Schläge abgebende Werkzeug weist einen Übertragungsschaft auf, der auf die Platte einwirkt.

Insbesondere für einteilige Ausbildung sind, nach einem weiteren Vorschlag, die Führungsmittel als an dem zweiten Abschnitt angeordnete, in Schlitze an der Hülse eingreifende Flügel ausgebildet. Aus Kostengründen kann der Spreizdorn insgesamt als nicht zum Dübel gehörendes Teil ausgebildet sein. Der Dübel zeichnet sich so durch besonders einfachen Aufbau aus. Die drehschlüssige Verbindung wird durch den Eingriff der Flügel in die Schlitze der Hülse gewährleistet.

Zur Erzielung eines gleichmässigen Verankerungsangriffs in der Aufnahmebohrung sind mehrere einander diametral gegenüberliegende Verriegelungskörper vorgesehen. Bei Verwendung von nur zwei Verriegelungskörpern kann auch ein besonders einfacher und kostengünstiger Aufbau des Dübels erzielt werden.

Der Erfindung liegt ferner die Aufgabe zugrunde, mit dem Dübel der in Rede stehenden Art entsprechend einem Selbstbohrdübel in einer vorgefertigten Aufnahmebohrung die Hinterschneidung für die Verriegelungskörper herzustellen.

Zu diesem Zwecke weisen die Verriegelungskörper in Weiterbildung der Erfindung auf der Aussenseite Schneiden auf. Durch Drehen der Hülse mit den Verriegelungskörpern unter gleichzeitigem Ausrücken der letzteren durch Eintreiben des Spreizdorns schaffen die Schneiden eine in der Aufnahmebohrung umlaufende Hinterschneidung, in der sie nach erfolgtem Schneidvorgang zur Verankerung formschlüssig eingreifen. Die Drehbewegung wird über die Führungsmittel vom Werkzeug in die Hülse eingeleitet.

Zum Lastangriff kann die Hülse ein Innengewinde aufweisen, das in Setzrichtung hinter den Verriegelungskörpern, zweckmässiger aber vor diesen angeordnet ist.

Die Erfindung wird nachstehend anhand von Zeichnungen, die Ausführungsbeispiele wiedergeben, näher erläutert. Es zeigen:

Fig. 1 einen Dübel in Ansicht, in einer Aufnahmebohrung;

Fig. 2 einen Grundriss des Dübels nach Fig. 1, gemäss Ansicht II–II in Fig. 1

Fig. 3 den Dübel nach Fig. 1 um 90° gedreht, im Längsschnitt;

Fig. 4 einen Grundriss der Verriegelungskörper in Ausgangsstellung, gemäss Ansicht IV–IV in Fig. 3;

Fig. 4a die Verriegelungskörper nach Fig. 4, in ausgerückter Stellung;

Fig. 5 den Dübel nach Fig. 3 in Verbindung mit einem Spreizdorn, zu Beginn des Spreizvorganges;

Fig. 6 einen Schnitt durch Spreizdorn, gemäss Schnittverlauf VI–VI in Fig. 5;

Fig. 7 den Dübel nach Fig. 5, in gespreizter Stellung, im Verwendungseinsatz;

Fig. 8 ein Detail des Dübels, gemäss Markierung VIII in Fig. 7, in vergrösserter Darstellung;

Fig. 9 eine weitere Ausführungsform eines Dübels in Ansicht, in einer Aufnahmebohrung;

Fig. 10 den Dübel nach Fig. 9 um 90° gedreht, im Längsschnitt, in Ausgangsstellung;

Fig. 11 einen Grundriss des Dübels gemäss Ansicht XI–XI in Fig. 10;

Fig. 12 einen Übertragungsschaft zur Verbindung eines Werkzeugs mit dem Dübel, in zwei zueinander um 90° versetzten Ansichten;

Fig. 13 den Dübel nach Fig. 10, in gespreizter Stellung, im Verwendungseinsatz.

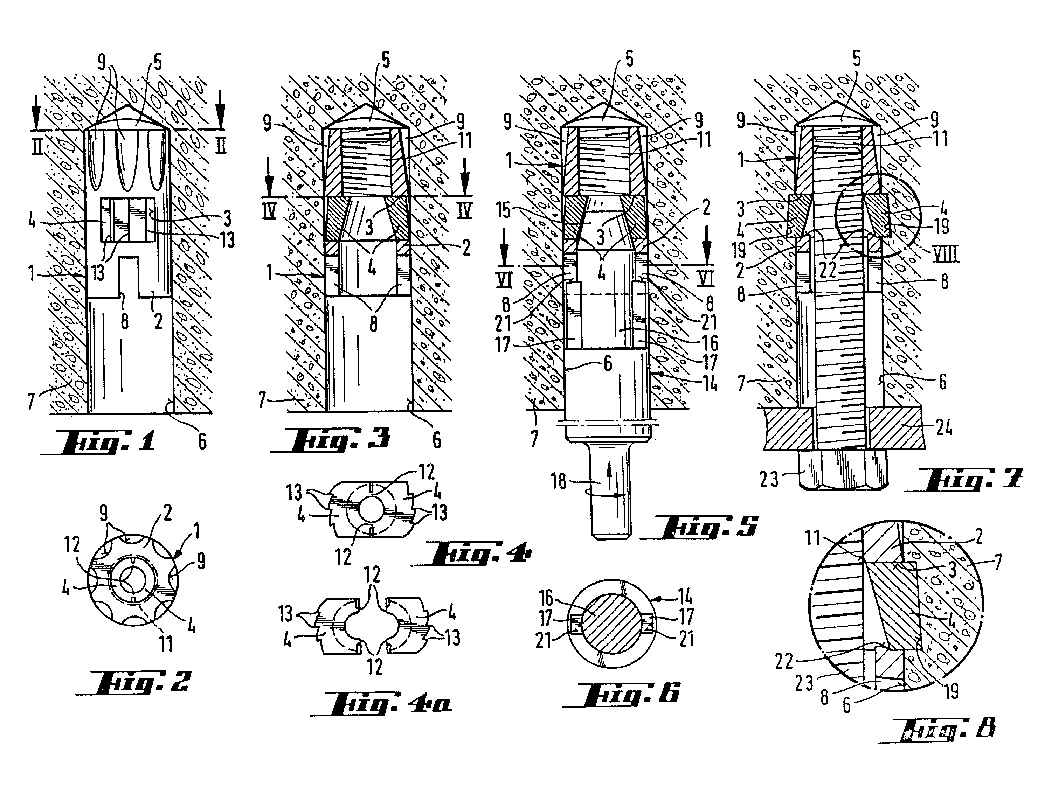

Der in Fig. 1 insgesamt mit 1 bezeichnete Dübel besteht im wesentlichen aus einer Hülse 2 und in fensterartigen Durchbrüchen 3 der Hülse 2 radial verschieblich gelagerten Verriegelungskörpern 4. Im setzrichtungsseitigen Ende der Hülse 2 steckt ein Pfropfen 5, der den Eintritt von störendem Bohrklein und desgleichen in die Hülse 2 unterbindet. Der Dübel 1 ist in eine im wesentlichen zylindrische Aufnahmebohrung 6 eines Untergrundes 7 eingeführt.

Wie die Fig. 1 zeigt, ist die Hülse 2 mit entgegen der Setzrichtung offenen Schlitzen 8 versehen. Ferner weist die Hülse 2 im setzrichtungsseitigen Endbereich am Umfang axial orientierte Hohlkehlen 9 auf, die anfallendes Bohrklein aufnehmen. Die Fig. 2 verdeutlicht die Anordnung und Ausbildung der Hohlkehlen 9.

In Fig. 3 ist der Aufbau des Dübels 1 weiter verdeutlicht. Der setzrichtungsseitige Endbereich trägt ein Innengewinde 11, in das der Propfen 5 eingesetzt ist. Die Dicke der Verriegelungskörper 4 ist grösser als die Wandstärke der Hülse 2. Die Innenkontur der Verriegelungskörper 4 ist konkav kegelig und ragt in der hier gezeigten Ausgangsstellung in die lichte Weite der Hülse 2.

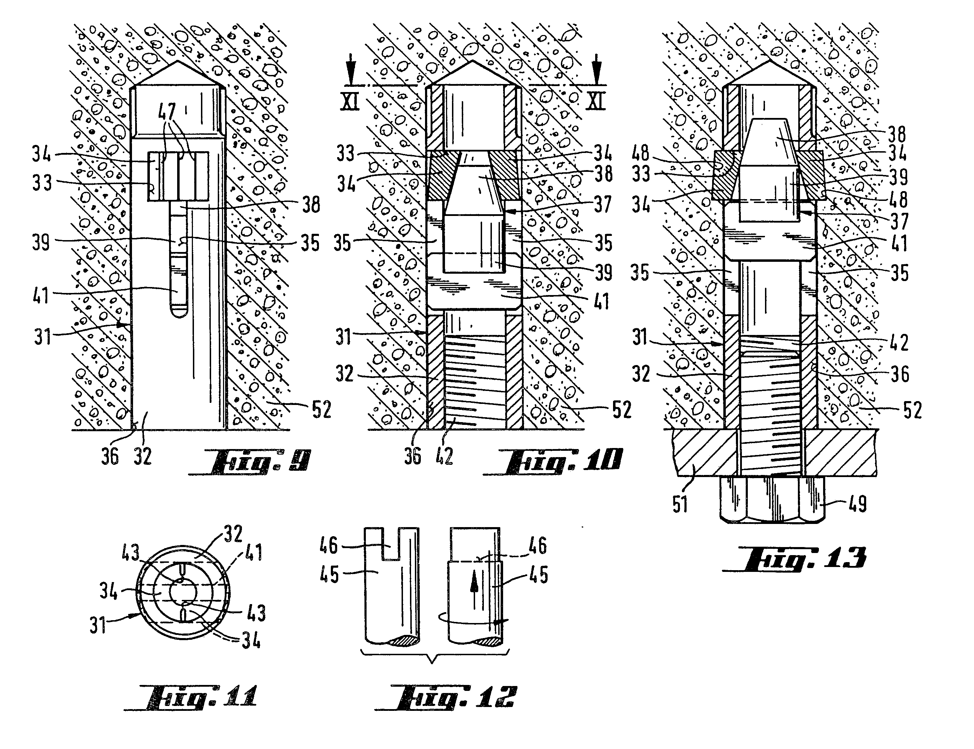

Wie der Fig. 4 zu entnehmen ist, sind die Verriegelungskörper 4 über Stege 12 miteinander zu einer Einheit verbunden. Beim Spreizvorgang bersten die Stege 12, worauf die Verriegelungskörper 4 in den Durchbrüchen 3 radial nach aussen verschoben werden, wie dies die Fig. 4a zeigt. An der Aussenseite tragen die Verriegelungskörper 4 sägezahnartige Schneiden 13.

Zur Erzielung einer Verankerung wird ein insgesamt mit 14 bezeichneter Spreizdorn in den Dübel 1 eingeführt. Der Spreizdorn 14 verfügt über einen ersten in Setzrichtung weisenden Abschnitt 15 mit kegeliger Mantelkontur, einen daran entgegen der Setzrichtung anschliessenden zweiten Abschnitt 16 mit einander diametral gegenüberliegenden Flügeln 17 und einen Einsteckschaft 18 zum Einspannen in ein Werkzeug, wie beispielsweise eine Schlagbohrmaschine. Mit dem ersten Abschnitt 15 ragt der Spreizdorn 14 zwischen die Verriegelungskörper 4 ein; die Flügel 17 erstrecken sich in die Schlitze 8. Die Fig. 6 verdeutlicht die Ausbildung und Anordnung der Flügel 17 im zweiten Abschnitt 16.

Dem Spreizdorn 14 werden vom aus Vereinfachungsgründen nicht gezeigten Werkzeug, wie in Fig. 5 durch Pfeile symbolisch angedeutet, Schläge und Drehung vermittelt. Durch die Schläge tritt der Abschnitt 15 in Setzrichtung weiter zwischen die Verriegelungskörper 4 ein und treibt diese dabei radial nach aussen. Die Drehung wird über die Flügel 17 und die Schlitze 8 auf den Dübel 1 übertragen. Die unter Drehung des Dübels 1 radial austretenden Verriegelungskörper 4 schaffen so mit den Schneiden 13 eine umlaufende Hinterschneidung 19 in der Aufnahmebohrung 6, wie dies die Fig. 7 zeigt. Nach vollständigem Eintreten des ersten Abschnittes 15 zwischen die Verriegelungskörper 4 laufen die freien Enden 21 der Flügel 17 am Grund der Schlitze 8 auf, wodurch es, wie die Fig. 8 verdeutlicht, zu einer Einbuchtung 22 in die Durchbrüche 3 kommt, so dass die Verriegelungskörper 4 in der ausgerückten Stellung und damit in der Hinterschneidung 19 gehalten werden. Der Spreizdorn 14 wird alsdann zurückgezogen und eine Schraube 23 zum Festlegen eines Gutes 24 eingedreht.

Auch der insgesamt mit 31 bezeichnete Dübel nach Fig. 9 verfügt über eine Hülse 32 mit Durchbrüchen 33, in denen Verriegelungskörper 34 verschieblich gelagert sind. Entgegen der Setzrichtung schliessen durchgehend zu den Durchbrüchen 33 Schlitze 35 an. Der Dübel 31 ist zur Verankerung in eine im wesentlichen zylindrische Aufnahmebohrung 36 eingeführt.

Wie die Fig. 10 verdeutlicht, sitzt in der Hülse 32 ein insgesamt mit 37 bezeichneter Spreizdorn. Dieser besteht aus einem ersten Abschnitt 38 mit kegeliger Mantelkontur und aus einem zweiten Abschnitt 39 mit einer lose eingesetzten Platte 41 als Führungsmittel. Der erste Abschnitt 38 ragt teilweise zwischen die Verriegelungskörper 34 ein. Die Platte 41 ist in den Schlitzen 35 geführt.

Engegen der Setzrichtung schliesst an die Schlitze 35 ein Innengewinde 42 an.

Die Fig. 11 zeigt wiederum die Verriegelungskörper 34 miteinander verbindende berstbare Stege 43.

Der in Fig. 12 insgesamt mit 45 bezeichnete Übertragungsschaft weist endseitig einen Querschlitz 46 auf, mit dem die Platte 41 gefasst wird. Von einem wiederum nicht gezeigten, Schläge und Drehung abgebenden Werkzeug wird so über den Übertragungsschaft 45 Drehung und Schlagenergie auf die Platte 41 eingeleitet, so dass der Dübel 31 insgesamt gedreht wird und dabei der Spreizdorn 37 mit dem ersten Abschnitt 38 weiter zwischen die Verriegelungskörper 34 einläuft. Letztere sind, ebenso wie jene nach Fig. 4, mit Schneiden 47 (andeutungsweise in Fig. 9 erkennbar) versehen und schaffen so, wie die Fig. 13 zeigt, eine Hinterschneidung 48. Der Spreizdorn 37 verbleibt alsdann in Spreizposition und verhindert ein radiales Zurückweichen der Verriegelungskörper 34 in die Ausgangsstellung. Mittels einer Schraube 49 wird ein Gut 51 an einem Untergrund 52 festgelegt.

## Patentansprüche

1. Dübel mit Hülse (2, 32), die fensterartige Durchbrüche (3, 33) aufweist, in welchen im wesentlichen radial verschiebbare, in Ausgangsstellung in die lichte Weite der Hülse (2, 32) ragende Verriegelungskörper (4, 34) gelagert sind, die eine die Hülsenwandstärke überragende Radialerstreckung aufweisen, und die in die lichte Weite der Hülse (2, 32) ragende freie Stirnseite der Verriegelungskörper (4, 34) mit einem die Verriegelungskörper (4, 34) in eine die Aussenkontur der Hülse (2, 32) überragende Stellung verschiebbaren Spreizdorn (14, 37) zusammenwirkt, auf den eine von einem Werkzeug wenigstens in Setzrichtung aufgebrachte Kraft einwirkt, wobei der Spreizdorn (14, 37) eine sich in Setzrichtung kegelig verjüngende, mit den Verriegelungskörpern (4, 34) zusammenwirkende Mantelkontur aufweist, dadurch gekennzeichnet, dass die Verriegelungskörper (4, 34) über beim Setzvorgang berstende Stege (12, 43) miteinander verbunden sind.

2. Dübel nach Anspruch 1, dadurch gekennzeichnet, dass der Spreizdorn (14, 37) über Führungsmittel (17, 41) in drehschlüssiger Verbindung mit der Hülse (2, 32) steht.

3. Dübel nach Anspruch 2, dadurch gekennzeichnet, dass der Spreizdorn (14, 37) aus einem die kegelige Mantelkontur aufweisenden ersten Abschnitt (15, 38) und einem die Führungsmittel (17, 41) tragenden zweiten Abschnitt (16, 39) besteht.

4. Dübel nach Anspruch 3, dadurch gekennzeichnet, dass die Führungsmittel als in den zweiten Abschnitt (39) und in Schlitze (35) an der Hülse (32) eingreifende Platte (41) ausgebildet sind.

5. Dübel nach einem Anspruch 3, dadurch gekennzeichnet, dass die Führungsmittel als an dem zweiten Abschnitt (16) angeordnete, in Schlitze (8) an der Hülse (2) eingreifende Flügel (17) ausgebildet sind.

6. Dübel nach einem der Ansprüche 1 bis 5, dadurch gekennzeichnet, dass mehrere einander diametral gegenüberliegende Verriegelungskörper (4, 34) vorgesehen sind.

7. Dübel nach einem der Ansprüche 1 bis 6, dadurch gekennzeichnet, dass die Verriegelungskörper (4, 34) auf der Aussenseite Schneiden (13, 47) aufweisen.

## Claims

1. A dowel comprising a sleeve (2, 32) which has window-like openings (3, 33), in which are mounted substantially radially displaceable locking bodies (4, 34) which project in the initial position into the clear width of the sleeve (2, 32) and which have a radial extent projecting beyond the thickness of the sleeve wall, and the free end face, projecting into the clear width of the sleeve (2, 32), of the locking bodies (4, 34) cooperates with a mandrel (14, 37) which is capable of displacing the locking bodies (4, 34) into a position projecting beyond the outer contour of the sleeve (2, 32) and on which a force applied by a tool acts at least in the setting direction, in which respect the expansion mandrel (14, 37) has a jacket contour tapering conically in the setting direction and cooperating with the locking bodies (4, 34), characterised in that the locking bodies (4, 34) are connected to one another by way ob webs (12, 43) which burst upon the setting procedure.

2. A dowel according to claim 1, characterised in that the expansion mandrel (14, 37) stands by way of guide means (17, 41) in rotation-locking connection with the sleeve (2, 32).

3. A dowel according to claim 2, characterised in that the expansion mandrel (14, 37) consists of a first portion (15, 38) which has the conical jacket contour and a second portion (16, 39) which bears the guide means (17, 41).

4. A dowel according to claim 3, characterised in that the guide means are designed as a plate (41) which engages into the second portion (39) and into slots (35) on the sleeve (32).

5. A dowel according to claim 3, characterised in that the guide means are designed as fins (17) which are arranged on the second portion (16) and which engage into slots (8) on the sleeve (2).

6. A dowel according to any one of claims 1 to 5, characterised in the provision of several locking bodies (4, 34) diametrically opposite to one another.

7. A dowel according to any one of claims 1 to 6, characterised in that the locking bodies (4, 34) have cutting edges (13, 47) on the outside.

## Revendications

1. Cheville avec douille (2, 32) qui comporte des ajours (3, 33) en forme de fenêtres dans lesquels sont placés des organes de verrouillage (4, 34) déplaçables sensiblement dans le sens radial et dépassant, dans la position initiale, dans le diamètre intérieur de la douille (2, 32), qui présentent une extension radiale supérieure à l'épaisseur de paroi de la douille, la face frontale libre des organes de verrouillage (4, 34) dépassant dans le diamètre intérieur de la douille (2, 32) coopérant avec un mandrin d'écartement (14, 37) qui déplace les organes de verrouillage (4, 34) dans une position en saillie du contour extérieur de la douille (2, 32) et sur lequel agit, du moins dans la direction d'enfoncement, une force appliquée par un outil, le mandrin d'écartement (14, 37) présentant une surface latérale qui se rétrécit coniquement dans la direction d'enfoncement et coopère avec les organes de verrouillage (4, 34), caractérisée en ce que les organes de verrouillage (4, 34) sont reliés entre eux par des barrettes (12, 43) qui éclatent lors de l'enfoncement.

2. Cheville selon la revendication 1, caractérisée en ce que le mandrin d'écartement (14, 37) est relié à la douille (2, 32) de manière rigide en rotation par l'intermédiaire de moyens de guidage (17, 41).

3. Cheville selon la revendication 2, caractérisée en ce que le mandrin d'écartement (14, 37) se compose d'une première section (15, 38) présentant un contour d'enveloppe conique et d'une seconde section (16, 39) portant les moyens de guidage (17, 41).

4. Cheville selon la revendication 3, caractérisée en ce que les moyens de guidage sont réalisés sous la forme d'une plaque (41) qui s'engage dans la seconde section (39) et dans des fentes (35) sur la douille (32).

5. Cheville selon la revendication 3, caractérisée en ce que les moyens de guidage sont réalisés sous la forme d'ailettes (17) conformées sur la seconde section (16) et s'engageant dans des fentes (8) sur la douille (2).

6. Cheville selon l'une quelconque des revendications 1 à 5, caractérisée en ce qu'il est prévu une pluralité d'organes de verouillage (4, 34) diamétralement opposés.

7. Cheville selon l'une quelconque des revendications 1 à 6, caractérisée en ce que les organes de verrouillage (4, 34) présentent, du côté extérieur, des tranchants (13, 47).

Fig. 1

Fig. 2

Fig. 3

Fig. 4

Fig. 4a

Fig. 5

Fig. 6

Fig. 7

Fig. 8

0200676

Fig. 9

Fig. 10

Fig. 11

Fig. 12

Fig. 13

0200676